# EUROPEAN PATENT SPECIFICATION

(11) **EP 2 050 594 B1**
(45) Date of publication and mention of the grant of the patent: **07.09.2011**
(21) Application number: 07425632.2
(22) Date of filing: 09.10.2007
(51) Int. Cl.: B60G 9/00, B60G 21/055

(54) **Rear suspension system for industrial vehicles with stabilizer bar integrated into the suspension unit**
Hinteres Aufhängungssystem für Industriefahrzeuge mit in der Aufhängungseinheit eingebautem Stabilisator
Système de suspension arrière pour véhicules industriels avec barre stabilisatrice dans l'unité de suspension

(43) Date of publication of application: 22.04.2009
(73) Proprietor: IVECO S.p.A., 10156 Torino (IT)
(72) Inventor: Lorenzetti, Giorgio, 10141 Torino (IT)
(74) Representative: Borsano, Corrado

(56) References cited:
- WO-A-2006/067551
- WO-A-2007/062744
- DE-A1- 1 405 983
- DE-A1- 1 940 678
- JP-A- 60 088 618
- US-A- 3 885 775
- US-A- 4 633 564
- US-A- 5 678 845
- US-B1- 7 234 713

## Description

This invention relates to a suspension system for industrial vehicles intended to transport goods and/or passengers and equipped with pneumatic suspensions, including a stabilizer bar or anti-roll bar.

It is known that the suspension system of industrial vehicles is subjected to great mechanical stress. Indeed, the problem of the functional optimization of the suspension system is strongly felt even in vans and trucks weighing from 6.5 to 10 tons.

The suspension systems currently in use are of a mechanical type, that is of the leaf spring type, or of a pneumatic type. In both cases, the stabilizer bar, or anti-roll bar, is an element of great importance for the stability of the vehicle trim, especially when the vehicle is loaded. The stabilizer bar is a part of primary importance in the suspension system and is placed outside the suspension unit in the strict sense, basically for construction and space reasons.

The suspension unit in the strict sense comprises the area around the wheel axis and usually includes shock absorbers, leaf springs in the case of mechanical suspensions or pneumatic elements in the case of pneumatic suspensions, linkages, such as a suspension bridge hinged to the frame and to which shock absorbers are connected, and other elements of the type known in the art. All these elements are grouped under the name of suspension unit and are all placed around the wheel axis. The suspension system, however, may include other elements besides the suspension unit in the strict sense, and one of these elements is the stabilizer bar or anti-roll bar.

From a structural point of view, the stabilizer bar is a torsion bar made of noble materials, such as special steels for springs with a high nickel and molybdenum content, which therefore are very expensive. The stabilizer bar joins the two suspensions placed at the opposite sides of the same axis, so as to limit the lateral inclination of the vehicle, or, more generally, the rolling of the vehicle when it is engaged in a bend or when its wheels are not on the same level.

The presence of the anti-roll bar does not influence the springing when the wheels on the same axis run at the same time into an obstacle or a depression.

In the known type suspension systems of two-axis vehicles, the stabilizer bar is placed at the back of the suspension unit, both in the case of a mechanical suspension unit, with a leaf spring, and in the case of a pneumatic suspension unit. The stabilizer bar is placed behind the back wheel axis, that is toward the rear part of the vehicle. The expressions at the front and at the back refer to the front part and to the rear part of the vehicle. Therefore at the back means toward the rear part of the vehicle.

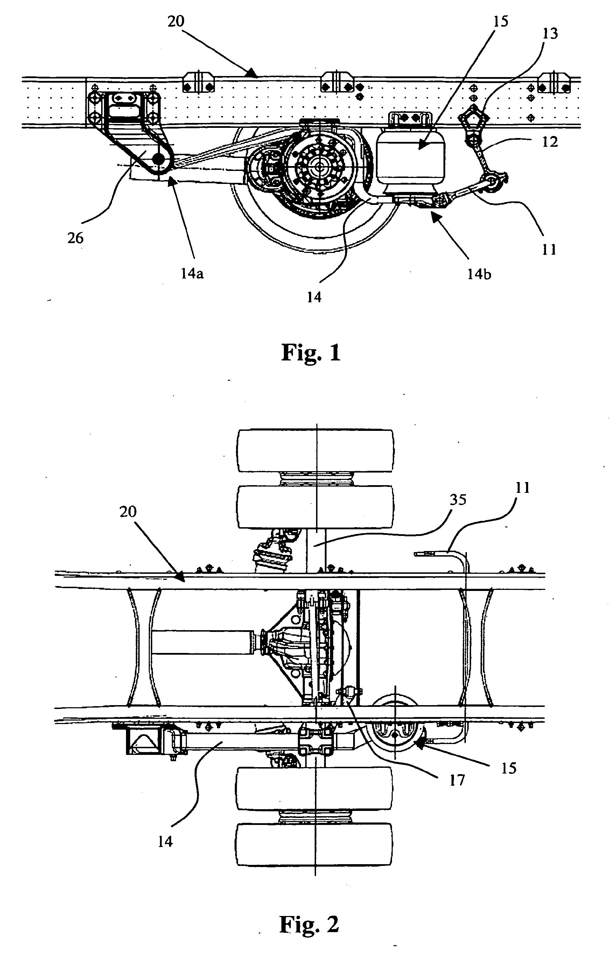

This architecture of a known type system of a rear suspension for a vehicle intended to transport goods and passengers is shown in Figures 1 and 2, which illustrate a case of pneumatic suspension.

In these systems of the type known, a stabilizer bar 11 is connected to the frame 20 by means of an element called hanger 12. The element called hanger 12 is placed at the back of the stabilizer bar 11 and it forms a kinematic mechanism with the vehicle frame 20. The hanger 12 is connected to the vehicle frame by means of the hinge eye 13, of the swinging arm 14 connected to the shock absorber 17 and, in the case of pneumatic suspensions, to the pneumatic spring 15, and of the stabilizer bar 11 itself.

Therefore the element 14 is a swinging arm hinged to the vehicle frame 20 at its first extremity 14a. When the vehicle undergoes rolling, that is a lateral inclination, the elements 14 of the suspension units placed on the opposite wheels of the same axis 35 oscillate with different amplitudes, and the different oscillation of the bridges 14 provides a torsional stress to the stabilizer bar 11.

In the systems of the type known, the torsion bar is connected to the swinging arms 14, as shown in figures 1 and 2.

The suspension unit in the strict sense comprises among other elements the swinging arm 14, the shock absorber 17 and possibly, in the case of pneumatic suspension, the pneumatic element 15. Therefore it does not include the stabilizer bar, which remains outside the suspension unit.

This architecture of the known type suspension units, however, features a number of drawbacks.

The first drawback is the reduction of space, due to the presence of the hanger in the rear part of the vehicle. As described before with the help of figures 1 and 2, in the suspension unit of the type known the stabilizer bar is connected to the vehicle frame by means of a kinematic mechanism called hanger, which comprises a connecting rod allowing the stabilizer bar to be hinged to the vehicle frame. This hanger stretches out toward the rear part of the vehicle and toward the ground.

The presence of the hanger limits in fact the maneuverability of the vehicle in different occasions. For exemple, travelling on ramps, the stabilizer bar and the hanger reduce the steepness the vehicle can handle without the risk of damaging these elements. The so-called ramp angle is a very important parameter for the homologation of the vehicle, and is also important from a practical point of view. For example, this parameter is fundamental for the vehicle maneuverability, when it is used for the transport of goods in harbour areas, because if the vehicle boards, the access ramps of the ships often have steeper inclination than the maneuverability of the vehicle can handle. Moreover, the presence of the hanger in the suspension system of the type known limits the maneuverability of the vehicle when it approaches the loading/unloading platforms of industrial or large-scale retail warehouses, if these platforms have steps that can be accidentally hit during the manoeuvring and bring the consequent damaging of the stabilizer bar.

An additional drawback or disadvantage of the suspension systems of the type known in the art is connected to the complexity of the kinematic mechanism of the hanger which causes a series of coupling backlashes, which actually reduce the stiffness of the stabilizer bar system.

Also, an additional drawback or disadvantage of the suspension systems of the type known is connected to the fact that, for space reasons, the stabilizer bar is connected by means of the hanger to the extremity 14b of the bridge 14 which, as already said, oscillates around the hinge 26.

A vertical movement, even if it is limited to the wheel axis, results in an oscillation of the arm or brigde 14 and, since the stabilizer bar 11 is connected to the extremity of the arm 14, the movement of the wheel and therefore of the axis is amplified and causes the stabilizer bar to rotate more. It is thus evident that such a system subjects the stabilizer bar to high torsion values also in case of limited rolling or lateral inclination of the vehicle. An evident consequence is the fact that the stabilizer bar has to be duly dimensioned with better resistant sections. This results in an increase of the production costs, given the high quality of the materials used, or, otherwise, in a reduced reliability of the bar.

From W02006067551 there is known a suspension for motorized industrial vehicle that may be interposed between a chassis of the vehicle and an axle system of the vehicle; the suspension comprises two parallel longitudinal arms having a first end and a second end; the two arms are rigidly connected by a transverse beam thus forming an H-shaped element with the latter, each end of the beam is embedded in one of the arms between the means of securing an axle system and the connection member; an important feature of this solution lies in the fact that an H-shaped element, which has considerable rigidity to twisting and a considerable transverse rigidity constitutes the basis of the suspension upon which suspension components can be grafted.

According to one embodiment of this solution there is provided a substantially U-shaped stabilizer bar; to secure this stabilizer bar, two U sections are provided, bolted to the axle, which each receive the free end of the longitudinal branches of the stabilizer bar allowing a pivot connection between the stabilizer bar and the axle; the stabilizer bar is moreover attached to each of the side rails of the chassis by supports. According to another embodiment, the stabilizer bar is coupled directly onto the connection brackets to the chassis.

The primary task of this invention is to provide a suspension system with stabilizer bar that overcomes the drawbacks of the solutions of the type known.

In the scope of this task, the purpose of this invention is to provide a suspension system with stabilizer bar which overcomes the problems of space in the rear part of the vehicle.

A further purpose of this invention is to provide a suspension system with stabilizer bar that optimizes the functioning of the stabilizer bar and consequently increases the overall stiffness of the system, which will result in an increase of the stability of the vehicle as regards the rolling movements.

Not least, the purpose of this invention is to provide a suspension system with stabilizer bar which optimizes the functioning of the stabilizer bar, by reducing the torsional stress of the bar that will causes the system to be more reliable and cheaper.

Also, a further purpose of this invention is to provide a suspension system with stabilizer bar that does not obstruct the levelling of the ground clearance of the vehicle, depending on its load and on its operating conditions, in case the suspension system is associated with a pneumatic suspension.

This task and these purposes, and others that are explained below, are achieved by a suspension system having the features set out in claim 1.

According to a further aspect, the present invention also relates to a vehicle having the features set out in claim 2.

Further characteristics and advantages of this invention will become clear from the following detailed description, that is merely illustrative and not limitative and is shown in the figures that are attached hereto, in which:
- figure 1 shows a side view of the suspension unit of the type known;
- figure 2 shows a top view of the same suspension unit of the type known shown in figure 1;

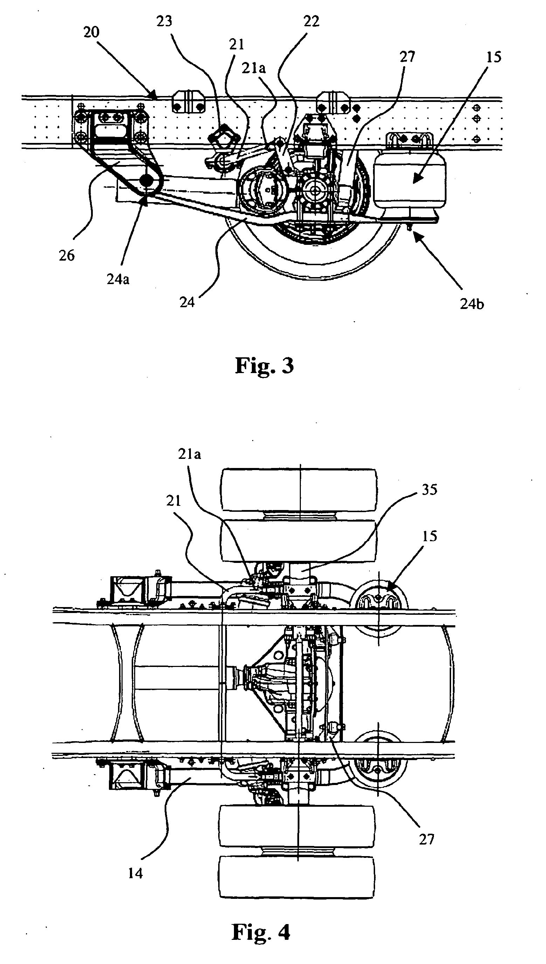

- figure 3 shows a side view of a suspension unit with integrated stabilizer bar according to this invention in condition of levelled load;
- figure 4 shows a top view of a suspension unit with integrated stabilizer bar according to this invention;
- figure 5 shows a side view of a suspension unit with integrated stabilizer bar according to this invention in condition of dynamic load;
- figure 6 shows a side view of a suspension unit with integrated stabilizer bar according to this invention in a raised condition;

According to a preferred embodiment of the invention, illustrated in the mentioned figures from 3 to 6 which are merely illustrative and not limitative, the suspension unit according to this invention includes a swinging arm of the suspension 24 hinged to the vehicle frame 20, on which a shock absorber 27 and a pneumatic element 15 are grafted.

According to a preferred embodiment of the invention, the suspension arm 24 passes under the rear wheel axis 35 and its extremity 24a is hinged to the bracket 26 of the vehicle frame 20. At the opposite extremity 24b, the suspension bridge 24 is connected to the pneumatic element 15, and the shock absorber 27 is grafted in an appropriate point of the bridge 24.

The bridge 24 constitutes a swinging arm hinged to the vehicle frame 20 at its first extremity 24a.

A stabilizer bar 21 connects the suspension units placed over the opposite wheels of the axis 35. The connection between the torsion bar 21 and the rear wheel axis 35 is made by means of a shackle element 22 on each side. The shackle 22 connects in particular the extremity 21 a of the bar 21 to the axis 35, making a mechanism similar to a connecting rod.

The body of the bar is linked to the vehicle frame by means of the eye 23, which supports the bar, and leaves it free to rotate on its longitudinal axis according to the forces conveyed by the shackle 22.

According to this invention, the suspension unit functions as follows.

The mechanism constituted by the shackle 22, the stabilizer bar 21 and the eye 23 converts the vertical rectilinear movements of the axis 35 in a rotation of the stabilizer bar 21 on its axis.

When the vehicle trim changes, the suspension unit works as usual: an equal displacement of the opposite wheels of the same axis 35 simply provides a rotation of the stabilizer bar, which is free to rotate in the eye 23.

On the contrary, when the displacement of the opposite wheels on the same axis 35 is not equal, and therefore the suspensions on each side of the vehicle move in different ways, the axis 35 provides a different displacement of the shackle 22 of one side of the vehicle, compared to that of the other side. Thus, the shackles 22 convey different movements to the stabilizer bar 21 from the two sides of the vehicle, and this results in a torsional stress of the bar, whose stiffness opposes the vehicle rolling.

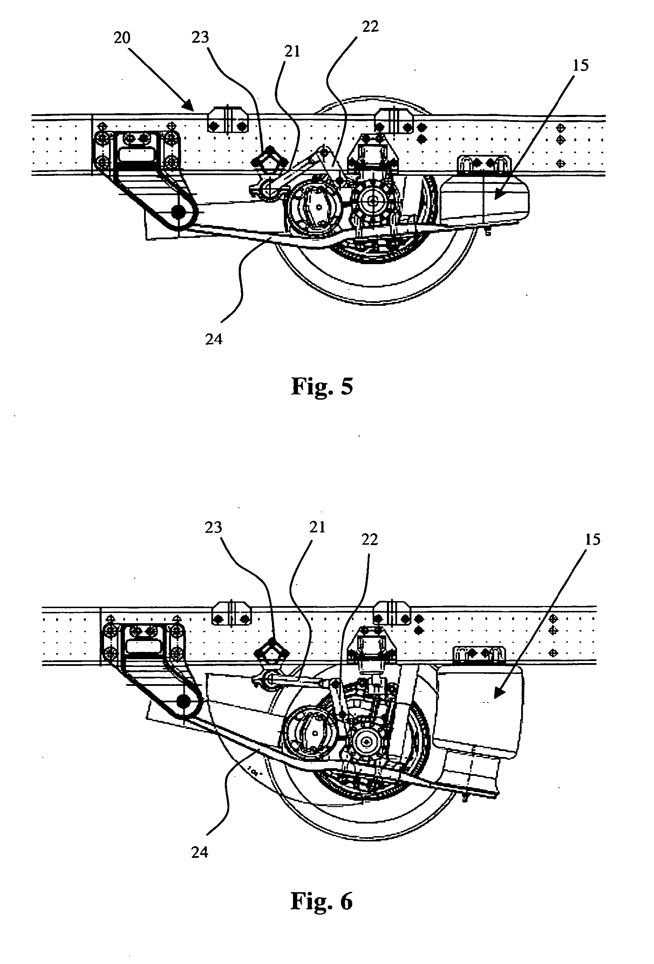

In case the suspension unit according to this invention is associated to pneumatic elements, as shown in the attached figures that are merely illustrative, it can be adjusted by means of the pneumatic elements in order to level the load and/or pass to a raised condition as shown in figure 6.

According to this invention, it has been shown that the suspension unit achieves the purpose and the objects proposed.

In particular, it has been shown that, according to this invention, the suspension unit with integrated stabilizer bar reduces the problems of space in the rear part of the vehicle, eliminating the hanger, used in the suspensions of the type known, and improving the maneuverability of the vehicle and the ramp angle it can handle. Moreover, the suspension unit according to this invention clears some space in the rear part of the vehicle that can be used for other accessories, such as a spare wheel, a toolbox or a tank. These accessories, however, should occupy a small space and should not obstruct the maneuverability of the vehicle and the ramp angle it can handle.

Also, a further purpose achieved by the suspension unit according to this invention is the simplification of the kinematic mechanism that connects the suspension to the stabilizer bar. Thus the whole system becomes stiffer and the suspension unit improves its reaction to the rolling of the vehicle. In particular, the connection, according to this invention, of the suspension unit to the stabilizer bar and the elimination of the connecting rod and the direct connection to the wheel axis rather than to the bridge 24 simplifies the kinematic mechanism, reducing its plays and making the action of the stabilizer bar more direct.

Also, the direct connection of the wheel axis to the stabilizer bar by means of the simplified kinematic mechanism according to this invention, stiffens the system and optimizes the action of the stabilizer bar which is no longer connected to the suspension bridge. In fact, as shown by this description and illustrated by the attached figures, in the known systems the movements of the wheel axis were transmitted to the stabilizer bar by means of a kinematic mechanism connected to the extremity of the suspension arm. This increases the rotating movements of the stabilizer bar, the vertical movement of the wheel axis being equal. The increase of the rotations of the bar results in an increase of the torsional stress of the stabilizer bar, and consequently it makes necessary to enlarge the bar itself.

A further advantage of the suspension unit according to this invention is the possibility to use bars with reduced sections, which results in a cheaper production.

It will be apparent to the person skilled in the art that various modifications can be conceived and reduced to practice without departing from the scope of the invention.

Therefore, the scope of the claims is not limited to the illustrations or the preferred embodiments shown in the description as an example, but rather the claims include all the patentable novelties deriving from this invention, including all the equivalent embodiments for a person skilled in the art.

## Claims

1. Suspension system for an industrial vehicle intended to transport goods and/or passengers and equipped with a vehicle frame (20) consisting of two horizontal, parallel straight rails and with pneumatic suspensions, comprising a suspension unit of the type comprising a swinging arm (24) connected to a rear wheel axis (35) with an extremity (24a) hinged to a said vehicle frame (20) and at least one shock absorber (27) and at least one pneumatic element (15) placed between said swinging arm (24) and said vehicle frame (20), a stabilizer bar or anti-roll bar (21) hinged under said vehicle frame (20), wherein the swinging arm (24) extends under the wheel axis (35), being the connection points between the swinging arm (24) and both said shock absorber (27) and pneumatic element (15) under and at the rear of the wheel axle (35), wherein said stabilizer bar (21) is connected to the vehicle frame (20) in a point at the front of the wheel axis (35) placed between said wheel axis (35) and the point where the extremity (24a) of the swinging arm (24) is hinged to the vehicle frame (20), wherein the hinging of the stabilizer bar (21) to said vehicle frame (20) comprises an eye (23) suitable for the connection of the stabilizer bar (21) to said vehicle frame (20), being said eye (23) suitable for leaving the bar (21) free to rotate on its longitudinal axis, **characterized by** the fact that
the stabilizer bar (21) is directly connected to the wheel axis (35) by means of a kinematic mechanism, the kinematic mechanism comprising a shackle (22) connecting the free extremity (21a) of the stabilizer bar (21) to said wheel axis (35) wherein the mechanism constituted by the shackle (22), the stabilizer bar (21) and the eye (23) converts the vertical rectilinear movements of the axis (35) in a rotation of the stabilizer bar (21) on its axis.

2. Vehicle comprising a suspension system according to the previous claim.

## Patentansprüche

1. Aufhängungssystem für ein Nutzfahrzeug, das für den Transport von Waren und/oder Passagieren vorgesehen ist und mit einem Fahrzeugrahmen (20), der aus zwei horizontalen, parallelen geraden Schienen besteht, sowie mit pneumatischen Aufhängungen ausgestattet ist, umfassend eine Aufhängungseinheit von dem Typ, der einen Schwenkarm (24), der mit einer Hinterradachse (35) verbunden ist, mit einem an dem Fahrzeugrahmen (20) eingehängten Endpunkt (24a) und zumindest einen Stoßdämpfer (27) sowie zumindest ein pneumatisches Element (15) umfasst, das zwischen dem Schwenkarm (24) und dem Fahrzeugrahmen (20) angeordnet ist, einen Stabilisator oder Querstabilisator (21), der unter dem Fahrzeugrahmen (20) eingehängt ist, wobei der Schwenkarm (24) sich unter der Radachse (35) erstreckt und die Verbindungspunkte zwischen dem Schwenkarm (24) und sowohl dem Stoßdämpfer (27) als auch dem pneumatischen Element (15) unter und an der Rückseite der Radachse (35) bildet, wobei der Stabilisator (21) mit dem Fahrzeugrahmen (20) an einem Punkt an der Vorderseite der Radachse (35) verbunden ist, der zwischen der Radachse (35) und dem Punkt angeordnet ist, an dem der Endpunkt (24a) des Schwenkarms (24) an dem Fahrzeugrahmen (20) eingehängt ist, wobei das Einhängen des Stabilisators (21) an dem Rahmen (20) ein Auge (23) umfasst, dass für die Verbindung des Stabilisators (21) mit dem Fahrzeugrahmen (20) geeignet ist, wobei das Auge (23) geeignet ist, den Stabilisator (21) frei für eine Drehung um seine Längsachse zu belassen,
**gekennzeichnet durch** die Tatsache, dass
der Stabilisator (21) mittels eines kinematischen Mechanismus mit der Radachse (35) direkt verbunden ist, wobei der kinematische Mechanismus einen Bügel (22) umfasst, der den freien Endpunkt (21a) des Stabilisators (21) mit der Radachse (35) verbindet, wobei der Mechanismus, der **durch** den Bügel (22), den Stabilisator (21) und das Auge (23) gebildet ist, die vertikalen geradlinigen Bewegungen der Achse (35) in eine Drehung des Stabilisators (21) um dessen Achse umwandelt.

2. Fahrzeug, das ein Aufhängungssystem nach dem vorhergehenden Anspruch umfasst.

## Revendications

1. Système de suspension pour un véhicule industriel, prévu pour transporter des marchandises et/ou des passagers et équipé d'un châssis de véhicule (20) se composant de deux rails droits parallèles horizontaux et avec des suspensions pneumatiques, comprenant une unité de suspension du type comprenant un bras oscillant (24) raccordé à un axe de roue arrière (35) avec une extrémité (24a) articulée par rapport audit châssis de véhicule (20) et au moins un amortisseur (27) et au moins un élément pneumatique (15) placé entre ledit bras oscillant (24) et ledit châssis de véhicule (20), une barre stabilisatrice ou barre antiroulis (21) articulée sous ledit châssis de véhicule (20), dans lequel le bras oscillant (24) s'étend sous l'axe de roue (35), les points de raccordement étant entre le bras oscillant (24) et à la fois ledit amortisseur (27) et l'élément pneumatique (15) au-dessous et au niveau de l'arrière de l'essieu de roue (35), dans lequel ladite barre stabilisatrice (21) est raccordée au châssis de véhicule (20) dans un point situé au niveau de l'avant de l'axe de roue (35) placé entre ledit axe de roue (35) et le point où l'extrémité (24a) du bras oscillant (24) est articulée par rapport au châssis de véhicule (20),
dans lequel l'articulation de la barre stabilisatrice (21) par rapport audit châssis de véhicule (20) comprend un oeillet (23) approprié pour le raccordement de la barre stabilisatrice (21) audit châssis de véhicule (20), ledit oeillet (23) étant approprié pour laisser la barre (21) libre de tourner sur son axe longitudinal, **caractérisé en ce que** :
la barre stabilisatrice (21) est directement raccordée à l'axe de roue (35) au moyen d'un mécanisme cinématique, le mécanisme cinématique comprenant une chape (22) raccordant l'extrémité libre (21a) de la barre stabilisatrice (21) audit axe de roue (35), dans lequel le mécanisme constitué par la chape (22), la barre stabilisatrice (21) et l'oeillet (23) transforme les mouvements rectilignes verticaux de l'axe (35) en une rotation de la barre stabilisatrice (21) sur son axe.

2. Véhicule comprenant un système de suspension selon la revendication précédente.
